# EUROPEAN PATENT SPECIFICATION

(11) **EP 0 877 906 B1**
(45) Date of publication and mention of the grant of the patent: **22.10.2003**
(21) Application number: 96904481.7
(22) Date of filing: 19.01.1996
(51) Int. Cl.: F27B 9/28, C03B 29/08

(54) **FORCED CONVECTION HEATING APPARATUS AND PROCESS FOR HEATING GLASS SHEETS THEREWITHIN**
ZWANGSKONVEKTIONSHEIZVORRICHTUNG UND VERFAHREN ZUR BEHEIZUNG VON GLASPLATTEN MIT DIESER VORRICHTUNG
DISPOSITIF DE CHAUFFAGE A CONVECTION FORCEE ET PROCEDE POUR CHAUFFER DES FEUILLES DE VERRE PLACEES A L'INTERIEUR

(43) Date of publication of application: 18.11.1998
(73) Proprietor: GLASSTECH, INC., Perrysburg, OH 43552 (US)
(72) Inventor: KORMANYOS, Kenneth, R., Sylvania, OH 43560 (US)
(74) Representative: Rees, Alexander Ellison
(86) International application number: US9600766
(87) International publication number: WO97026496

(56) References cited:
- EP-A- 0 249 361
- EP-A- 0 370 310
- EP-A- 0 370 313
- EP-A- 0 448 983
- DE-A- 2 741 098
- US-A- 4 591 517
- US-A- 4 997 364
- US-A- 5 110 338
- US-A- 5 112 220
- US-A- 5 443 382
- US-A- 5 669 954

## Description

### Technical Field

The present invention relates to a gas-fired forced convection heating apparatus and process for heating glass sheets therewithin.

### Background Art

Heating of glass sheets in a gas-fired forced convection furnace has been known in the art for several years. Indeed, one such type of prior arc gas-fired furnace conveys a sheet of glass through the furnace on a bed of air. As the glass "floats" through the furnace, hot air is distributed toward and into contact with the top and bottom surfaces of the glass sheet. However, due to the complexity of a "floating" system, prior art devices of this type typically use convective heat flow to the bottom surface of the glass sheet, and radiant heat flow to the top surface of the glass sheet.

After the heated working fluid has impinged the bottom surface of the glass sheet, a portion of the "spent" working fluid is randomly returned toward a proximally positioned gas burner where the spent working fluid and newly produced products of combustion are mixed and then recirculated toward impingement of same on the glass sheet.

Furthermore, prior art gas-fired heating devices such as that described by EP-A-0249361 have also been used in which convective heat that is to impinge upon the top surface of a glass sheet is distributed from one or more gas burners located above the glass sheet as it passes through the device, and, convective heat that impinges the bottom surface of the glass sheet is distributed by one or more gas burners located below the glass sheet.

However, existing gas-fired convection heating systems cannot provide the capability of separately controlling the velocity of impingement of the working fluid with the surface of the glass sheet to be heated, independent from control of the heat input to the system.

In addition, none of such prior art devices disclose, much less suggests, the use of gas-fired burners operably positioned above and below the glass sheet for producing and, in turn, distributing, forced convective flow of the hot working fluid to corresponding ones of the top and bottom surfaces of the glass sheet in which: (1) the heat input to and, consequently, the temperature of, the working fluid above and below the glass sheet may be controlled independently; and/or (2) the impingement velocity of the hot working fluid being distributed onto the top and bottom surfaces of the glass sheet can be independently controlled -- toward control of uniform convection heat transfer to the top and bottom surfaces of the glass sheet, to, in turn, compensate for glass thickness, coating and color, among other variables.

It is therefore an object of the present invention to provide a forced convention heating apparatus and process for heating glass sheets therewithin that does provide the capability for separately controlling the velocity of the impingement of the working fluid with the surface of the glass sheet to be heated, independent from control of the heat input to the system, thereby compensating for glass thickness, coating and color, among other variables.

It would be desirable for a preferred embodiment of the invention to use gas-fired burners operably positioned above and below the glass sheet, thereby overcoming the shortcomings of the prior art described above.

And, although such prior art devices have indeed disclosed recirculation of spent working fluid and use of gas-fired burners, none of such prior art devices disclose, much less suggests, drawing spent hot working fluid toward and into a mixing chamber operably and closely positioned about a substantial portion of a gas burner -- in which the gas burner is specifically intended to produce, for distribution, hot combustion gases to the respective top and/or bottom surfaces of the glass sheet being heated.

These and other features of the present invention will become apparent because of the present specification, claims and drawings.

### Disclosure of Invention

The present invention relates to a gas-fired force convection heating apparatus and process for heating glass sheets. The process, which may be implemented in the apparatus as described below, comprises the steps of inserting a glass sheet into the interior region of the housing, producing hot combustion gases from at least one gas burner, adjusting the rate of production of the hot combustion gases, thereby adjusting the rate of heat input to the apparatus, distributing the hot combustion gases from the at least one gas burner toward and into operable contact with a surface of the glass sheet within the interior region of the housing, and adjusting the impingement velocity of the hot combustion gases on the surface of the glass sheet, thereby controlling the rate of convective heat exchange between the hot combustion gases and the glass sheet substantially independently of controlling the heat input to the apparatus. The apparatus comprises a housing having an interior region, and a conveyor for conveying a glass sheet horizontally through the interior region of the housing. At least one gas burner is operably associated with the housing for producing hot combustion gases, thereby providing a heat input to the apparatus. An adjustor is operably associated with the gas burner for adjusting the level of heat input thereby from the gas burner to the apparatus maintaining the temperature of the working fluid at a preselected set point.

The forced convection heating apparatus further comprises a mixing chamber for mixing the hot products of combustion with working fluid recirculated within the housing. This mixing chamber may be operably positioned about at least a portion of the gas burner means. The mixing chamber may include a proximal end operably associated with the first and second distributing means, and a second open end distally spaced from the proximal end.

The apparatus further includes a distributor for distributing, and, in turn impinging, a working fluid including at least a portion of the hot combustion gases from the gas burner to the surface of the glass sheet.

The apparatus further includes a velocity control for controlling the impingement velocity of the hot working fluid toward and into contact with the surfaces of the glass sheet independently of the operation of the adjustor for the gas burner. It will be appreciated that, since the rate of convective heat exchange at the glass sheet surface is a function of the impingement velocity of the working fluid, the velocity control provides control of the rate of convective heat transfer to the glass sheet independent of control (via the adjustor) of the heat input into the system.

The apparatus further includes a director for directing spent hot working fluid, which has impinged upon at least one of the top and bottom surfaces of the glass sheet, toward and into the mixing chamber for operable mixing of at least a portion of the spent hot working fluid with newly produced hot gaseous products of combustion from the gas burner toward transfer of same into at least one of the first and second distributors and, in turn, toward and into operable contact with at least one of the top and bottom surfaces of the glass sheet within the interior region of the housing.

In one embodiment, the distributor includes a first distributor for distributing to the bottom surface of the glass sheet within the interior region of the housing, as well as a second distributor for distributing, and, in turn, impinging at least a portion of the hot combustion gases from the gas burner means to the top surface of the glass sheet within the interior region of the housing. Similarly, a first temperature adjustor is also incorporated for adjusting the temperature of the working fluid prior to impingement of same onto the bottom surface of the glass sheet, and, a separate second temperature adjustor is incorporated for adjusting the temperature of the working fluid prior to impinging of same onto the top surface of the glass sheet. These first and second adjustors being operable, and, in turn, adjustable, independently of each other.

In one embodiment of the invention, the velocity control further comprises a first velocity control for controlling impingement velocity of the hot working fluid toward and into contact with the bottom surface of the glass sheet within the interior region of the housing, and, a second velocity control for controlling impingement velocity of the working fluid toward and into contact with the top surface of the glass sheet. The first and second velocity controls being operable, and, in turn, controllable, independently of each other.

In one embodiment of the invention, the forced convection heating apparatus further comprises a mixer for causing a mixture of the spent hot working fluid and the newly produced hot combustion gases within the mixing chamber. The mixer comprises a plurality of apertures integrally formed in the gas burner means for release of the hot combustion gases in a direction substantially perpendicular to the longitudinal axis of the gas burner means. The spent hot working fluid is then operably drawn into the mixing chamber in a direction substantially perpendicular to the hot combustion gases as it is being operably released from the gas burner means to, in turn, result in a mixture of the spent working fluid and newly produced hot gaseous products of combustion.

Also in one embodiment of the invention, the working fluid director includes at least one fan operably associated with the mixing chamber for drawing at least a portion of the spent hot working fluid that has impinged upon at least one of the top and bottom surfaces of the glass sheet within the interior region of the housing toward and into the mixing chamber. It is also preferred that the first and second distributors each include at least one fan and at least one working fluid conduit member operably associated with a corresponding one of the at least one fan. Each of the working fluid conduit members has at least one nozzle member operably positioned adjacent a corresponding one of the top and bottom surfaces of the glass sheet within the interior region of the housing for operably distributing, and, in turn, impinging at least a portion of the hot combustion gases toward and onto the adjacent top and bottom surfaces of the glass sheet.

The first and second working fluid distributors each include a plenum member operably positioned between corresponding ones of the fan and hot working fluid conduit member.

The preferred embodiment of the invention also includes a process for heating a sheet of glass in a gas-fired forced convection heating apparatus, in which the apparatus includes a housing having an interior region and the glass sheet has a top and bottom surface.

The system of the present invention also preferably includes at least one exhaust stack including an adjustable damper to allow for control of the rate of exhaust of the working fluid from the system to provide a balanced pressure at the conveyor roller seats, the glass sheet entrance, and glass sheet exits of the furnace and, thus, prevent the influx of cooler ambient air from the factory environment into the furnace.

The process comprises the steps of: (a) inserting a glass sheet into the interior region of the housing; (b) inputing heat to the apparatus by producing hot gaseous products of combustion from at least one gas burner; (c) mixing the hot gaseous products of combustion with a working fluid; (d) distributing the working fluid into operable contact with at least a portion of the surfaces of the glass sheet within the interior region of the housing; (e) monitoring the temperature of the working fluid; (f) adjusting the heat input to the system to maintain the temperature of the working fluid at a preselected set point; and (g) adjusting the impingement velocity of the working fluid to thereby adjust the rate of convective heat exchange at the glass sheet surface. The adjusting of the impingement velocity of the working fluid being independent of adjustment of the temperature of the working fluid.

In one embodiment of the invention, the process further comprises the steps of: (a) adjusting the temperature of the working fluid which is to be distributed toward and into contact with the bottom surface of the glass sheet; and (b) adjusting the temperature of the working fluid that is to be distributed toward and into operable contact with the top surface of the glass sheet. The adjusting of the temperatures of the hot working fluid which is being distributed toward and onto the top and bottom surfaces, respectively, of the glass sheet, being adjustable independently of each other.

In one embodiment of the invention, the process for heating a glass sheet within a forced convection heating apparatus further comprises the steps of: (a) drawing at least a portion of spent hot working fluid, which has operably contacted at least one of the top and bottom surfaces of the glass sheet, toward and into a mixing chamber operably associated with a corresponding one of the at least one gas burner -- in which the mixing chambers are operably positioned about at least a portion of a corresponding one of at least one gas burner; (b) mixing the spent hot working fluid in the mixing chamber with the hot combustion gases being produced from a corresponding one of the at least one gas burner; and (c) distributing the mixed spent hot working fluid and the newly produced hot combustion gases toward and into operable contact with at least one of the top and bottom surfaces of the glass sheet within the interior region of the housing.

In another preferred embodiment of the invention, the process for heating a sheet of glass in a forced convection heating apparatus further comprises the steps of: (a) controlling the impingement velocity of the mixed spent hot working fluid and newly produced hot combustion gases that are to come into contact with the bottom surface of the glass sheet; and (b) controlling the impingement velocity of the mixed spent hot working fluid and newly produced hot combustion gases that are to come into contact with the top surface of the glass sheet. The controlling of the impingement velocity of the mixed fluids that are to come into contact with the top and bottom surfaces, respectively, of the glass sheet, being controllable independently of each other.

### Brief Description Of Drawings

FIGURE 1 of the drawings is a perspective view of the forced convection heating apparatus in partial cross-section and in partial break-away;
FIGURE 2 of the drawings is a side cut-away view of the forced convection heating apparatus;
FIGURE 3 of the drawings is a cross-sectional view of the forced convection heating apparatus taken generally along lines 3-3 of Figure 2;
FIGURE 4 of the drawings is a cross-sectional view of the forced convection heating apparatus taken generally along lines 4-4 of FIGURE 3;
FIGURE 5 of the drawings is a cross-sectional view of an array of the first and second distributing means, showing, in particular, distribution of hot working fluid out of the corresponding nozzles, and, accordingly toward and into contact with the top and bottom surfaces of a glass sheet within the interior region of the housing of the forced convection heating apparatus;
FIGURE 6 of the drawings is a perspective view of the nozzles; and
FIGURE 7 of the drawings is a schematic view of the apparatus of the present invention.

### Best Mode(s) For Carrying Out The Invention

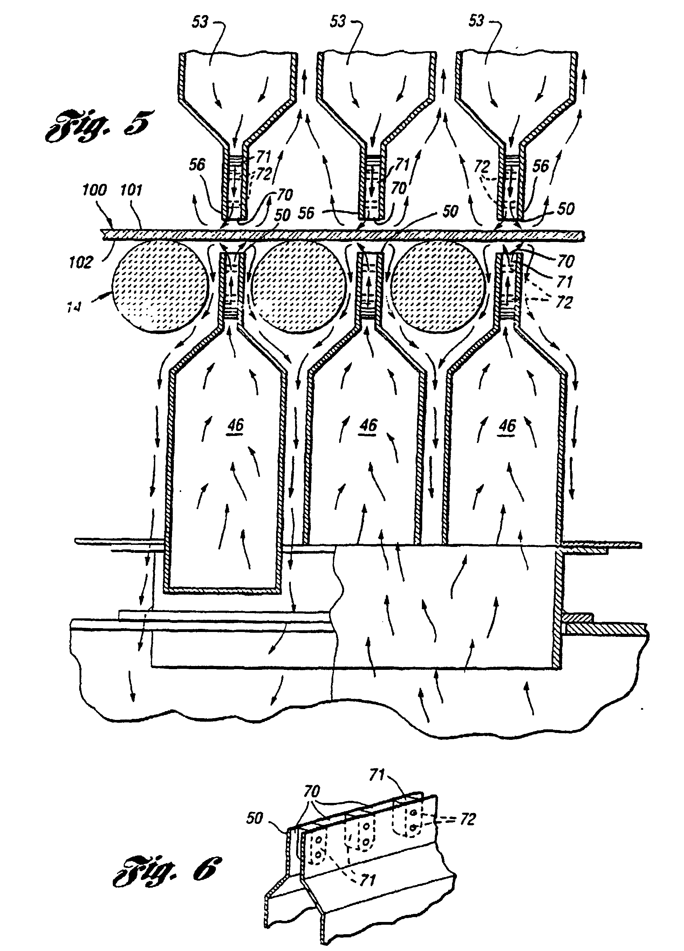

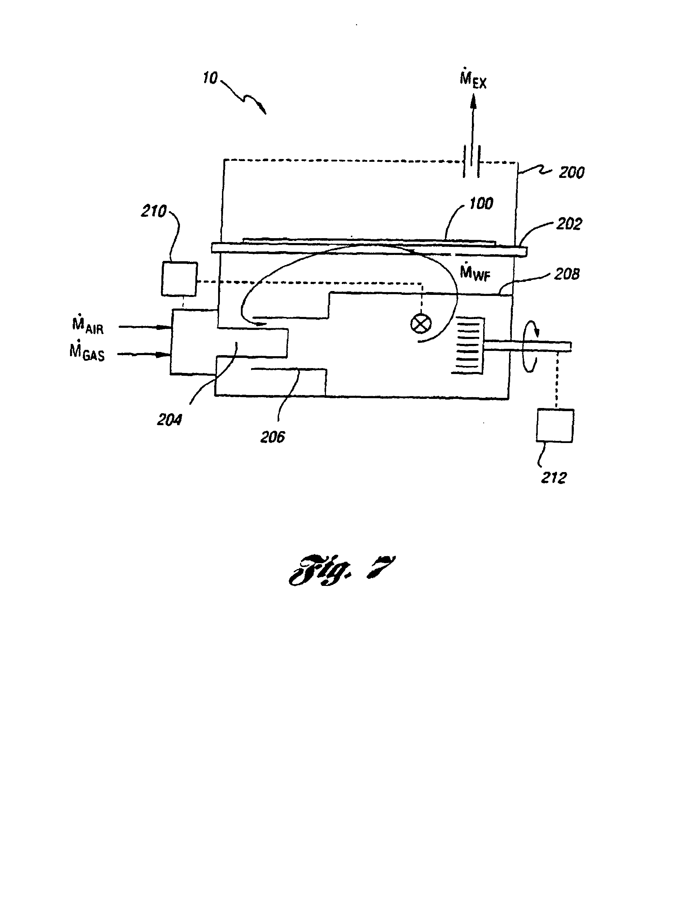

The gas-fired forced convection heating apparatus 10 of the present invention is schematically illustrated in Figure 7. The apparatus includes a housing 200, a conveyor 202, at least one gas burner 204 for creating hot gaseous products of combustion which provide heat input to the apparatus, a mixing chamber 206 for mixing the products of combustion with a working fluid, a distributor 208 for distributing the heated working fluid including at least a portion of the hot products of combustion to a surface of the glass sheet 100 within the interior region of the housing 200, an adjuster 210 for adjusting the level of heat input from the gas burner 204 to maintain the temperature of the working fluid at a preselected set point, and a control 212 for adjusting the velocity of the working fluid prior to impingement of the same on the surface of the glass sheet 100 thereby controlling the rate of convective heat exchange between the working fluid and the glass sheet substantially independently of the control of heat input to the system 10.

While this invention is susceptible of embodiment in many different forms, there is shown in the drawings and will herein be described in detail, one specific embodiment with the understanding that the present disclosure is to be considered as an exemplification of the principles of the invention and is not intended to limit the invention to the embodiment illustrated.

At the outset, although it is contemplated that gas-fired forced convection heating apparatus 10 be constructed with multiple gas burners, related distribution and recirculating assemblies/units, only two of such assemblies/units will be explained in detail -- since any additional units would comprise substantially the same components and intercooperation therebetween.

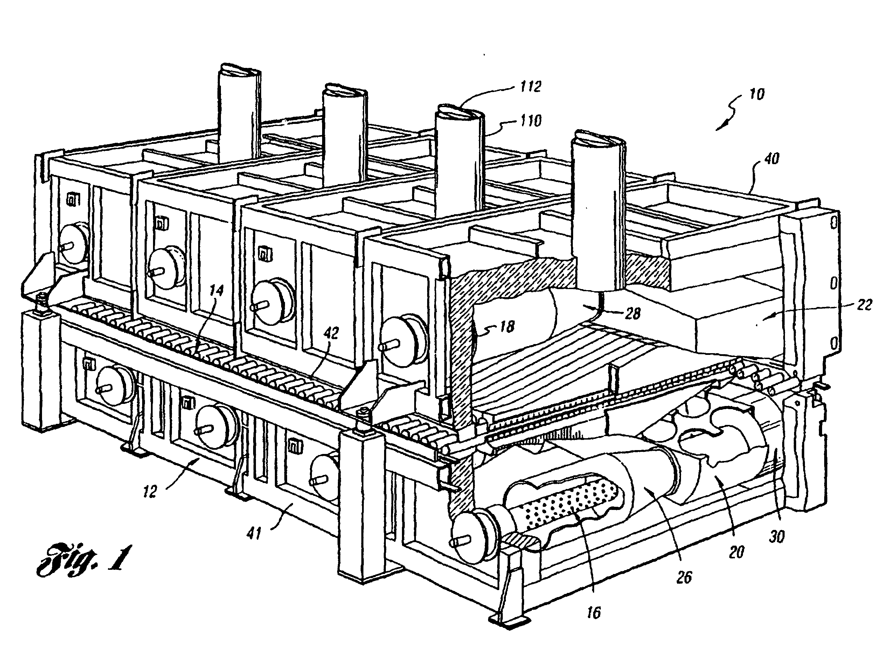

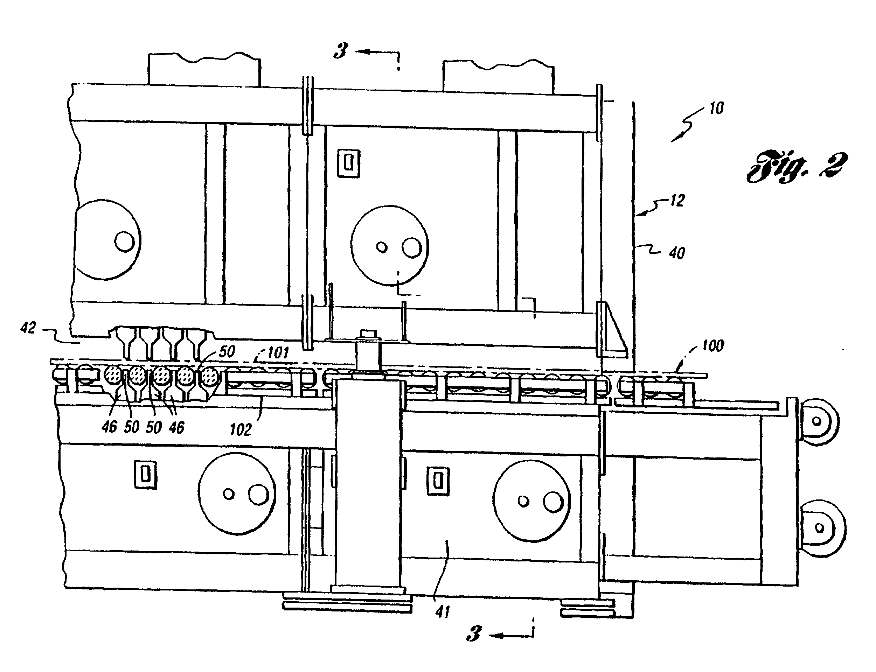

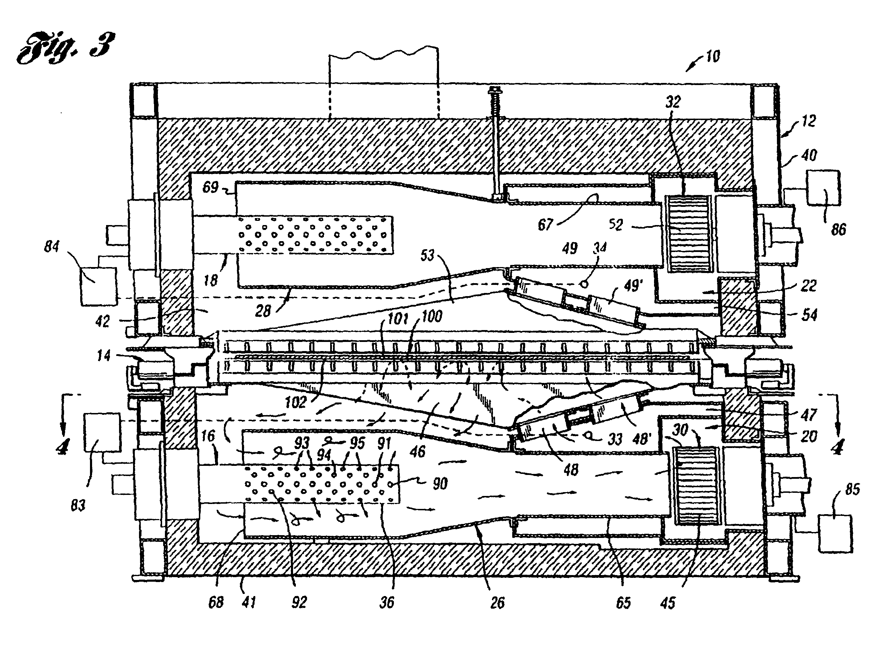

One embodiment of the forced convention heating apparatus 10 is shown in Fig. 1 and Fig. 3 as comprising housing 12, conveyor 14, a first gas burner 16, a second gas burner 18, a first distributor 20, a second distributor 22, a first mixing chamber 26, a second mixing chamber 28, a first director 30, a second director 32 (Fig. 3), a first temperature adjustor 83 (Fig. 1), a second temperature adjustor 84 (Fig. 1), a mixer 36 (Fig. 3) and first and second impingement velocity controls, 85 and 86, respectively.

Housing 12, as shown in Figs. 1-3, includes upper section 40, lower section 41, and interior region 42. Conveyor 14, which may comprise a plurality of ceramic rollers, is operably positioned between the upper and lower sections of housing 12, and are used to convey a glass sheet, such as glass sheet 100 (Fig. 2 and Fig. 3) through interior region 42 of housing 12. Glass sheet 100 includes top surface 101 and bottom surface 102. As can be seen in Fig. 2 and Fig. 3, when glass sheet 100 is operably positioned within interior region 42 of housing 12, top surface 101 will be operably exposed to upper section 40 of housing and bottom surface 102 will be operably exposed adjacent lower section 41 of housing 12.

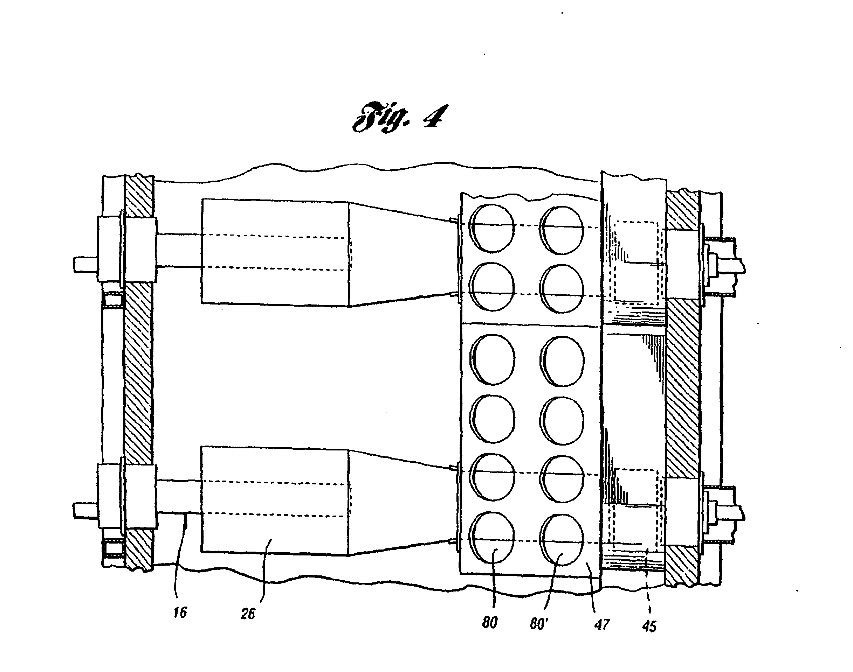

First distributor 20 is shown in Fig. 3 as comprising fan 45, working fluid conduit 46, and plenum member 47. Working fluid conduit 46 includes a plurality of male insert members, such as male insert member 48, 48' (Fig. 3) which are operably seated within corresponding receptacles, such as receptacles 80, 80' (Fig. 4) of the corresponding plenum member 47 (Fig. 4), and a plurality of nozzles, or jets, 50 (Fig. 5). As will be explained in greater detail, nozzles 50 comprise a passage 70 (Fig. 6), for operable release of hot working fluid, toward and into contact with bottom surface 102 of glass sheet 100. Nozzle 50 is comprised of two parallel plates spaced apart by separators 71 and held together by fasteners 72. It is conceivable that different other types of embodiments of this structure are possible including nozzles that distribute the hot combustion gases in a radial arc, and stamped half nozzles assembled in such a way as to provide a set of flow passages defining the nozzles.

Second distributor 22 is also shown in Fig. 3 as including fan 52, working fluid conduit 53, and plenum member 54. Working fluid conduit 53 of the second distributing means also includes a plurality of male insert members 49, 49' (Fig. 3) for operable insertion into corresponding receptacles (not shown) of plenum member 54, and nozzles (Fig. 5). These nozzles, like nozzles 50 of first distributing means 20, enable hot combustion gases produced from a corresponding gas burner means 18 (Fig. 3) to be released toward and into operable contact with to surface 101 of glass sheet 100.

First mixing chamber 26 and second mixing chamber 28 are shown in Fig. 3 and Fig. 4. As can be seen, first mixing chamber 26 is operably positioned about a portion of first gas burner means 16, and second mixing chamber 28 is operably positioned about a portion of second gas burner means 18. Both the first and second mixing chambers 26 and 28, respectively, include a proximal end 65 and 67, respectively, and an open end 68 and 69, respectively -- in which the proximal ends are operably positioned adjacent a corresponding fan, such as fans 45 and 52 (Fig. 3).

The fans, such as fans 45 and 52, which, among other things, serve to distribute hot combustion gases from the respective gas burner means toward and into eventual contact with the glass sheet, also serve as part of the directing means for drawing spent hot working fluid that has impinged on the top and bottom surfaces 101 and 102, respectively, of glass sheet 100, toward and into a corresponding one of the first and second mixing chambers 26 and 28, respectively (as shown by the direction of the arrows in Fig. 3). First and second directors 30 and 32, respectively, each use fans 45 and 52, respectively, for drawing spent hot working fluid into a corresponding mixing chamber.

As the spent hot working fluid is drawn into the respective mixing chambers, the spent working fluid and the newly produced hot combustion gases are mixed because of mixer 36 (Fig. 3). As can be seen in Fig. 3, the mixer comprises a plurality of apertures, such as apertures 90-95 integrally formed through each of the gas burner, such as gas burner 16 and 18 coupled with the substantially parallel flow of the spent hot working fluid, relative to the longitudinal axis of the respective gas burner, as it enters into the mixing chamber. Accordingly, since the newly produced hot products of combustion are being released through apertures, such as apertures 90-95, in a direction substantially perpendicular to the longitudinal axis of the gas burner, the spent hot working fluid being drawn into the mixing chamber will, in effect, collide with the newly released hot combustion gases, to, in turn, result in a mixture of spent and newly produced hot combustion gases.

First and second adjustors 83 and 84, respectively, are shown in Fig. 1 as comprising controls connected to thermocouples 33 and 34 --although any other type of conventional mechanism for altering the temperature of the hot combustion gases to be produced, or after it is produced, from a corresponding one of the gas burner means, is also contemplated for use. As will be explained, each of the adjusters independently controls the heat input, preferably by controlling the air and gas input to one of the gas burners.

First and second impingement velocity controls are shown in Fig. 3, in which impingement velocity of the hot working fluid being distributed toward and into the top and bottom surfaces of the glass sheet is independently controlled by adjusting the speed on the shaft of fans, such as shafts of fans 45 and 52. Such controls enable the impingement velocity of the hot combustion gases being directed toward and into contact with the top surface of the glass sheet to be adjusted independently, and, in turn, at a different velocity than the hot working fluid being directed toward and into the bottom surface of the glass sheet -- if so desired.

In operation, glass sheet 100 is inserted within interior region 42 of housing 12 through a glass sheet insertion inlet (not shown), and transfer of the glass sheet through the interior region of the housing is accomplished by conveying means 14. Although the conveying means may comprise ceramic rollers, other types of rollers or other conventional conveying mechanisms are also contemplated for use.

As glass sheet 100 is being conveyed through housing 12, top surface 101 will be operably exposed adjacent a portion of second distributor 22, and more particularly, adjacent the array of nozzles in working fluid conduit 53 (as shown in Fig. 5). Accordingly, bottom surface 102 of glass sheet 100 will be operably positioned adjacent a portion of first distributor 20, and more particularly, adjacent the array of nozzles 50 of working fluid conduit 46. As can be seen in Fig. 2 and Fig. 5, each of the nozzles 50 of working fluid conduit 46, of first distributor 20, are operably positioned between the individual rollers of conveying means 14. Such an orientation facilitates relatively unobstructed impingement of the hot working fluid toward and onto bottom surface 102 of glass sheet 100.

In addition, as glass sheet 100 is being conveyed through housing 12, each of the gas burner means, such as gas burner means 16 and 18, respectively, in combination with each mixing chamber 26 and 28 will be producing hot working fluid at a desired temperature. Since the sheet of glass to be heated may be of a type different than that of a sheet of glass previously heated in apparatus 10 (e.g., different glass colors, surface treatments and/or thicknesses, among other variables), it is important to note that the temperature of the hot working fluid being produced from each of the respective gas burner means, in combination with each mixing chamber and the impingement velocity of same, can be controlled independently of each other (by the corresponding temperature adjustors and impingement velocity controls). Moreover, this embodiment of the system provides for independent control of convection heat transfer to the top and bottom surfaces 101 and 102, respectively, of the specific glass sheet 100 being heated. Indeed, such independent controlling of heat input and rate of convective heat transfer, as well as independent controlling of each of these parameters on the top and bottoms of the glass sheets, provides more precise control of the glass sheet heating process and enables different types of glass sheets to be processed at a substantially constant rate within apparatus 10 -- without the necessity of altering the speed at which the glass is conveyed through the apparatus.

As the hot combustion gases are being produced from the gas burner means, 16 and 18 it will be released from the apertures therein, and then will flow in the direction of the arrows, as shown in Fig. 3. The hot combustion gases will mix with the spent hot working fluid returning through apparatures 68 and 69, producing new hot working fluid. As previously explained, such a flow pattern will occur because of corresponding fans 45 and 52, respectively. The new hot working fluid enters the first and second distributors 20 and 22 by the action of fans 45 and 52 respectively. The hot working fluid will then continue to travel through the respective working fluid conduits until it is released through corresponding nozzles, such as nozzles 50 and 56, where the hot combustion gases will then impinge upon the adjacently positioned top and bottom surfaces 101 and 102, respectively, of glass sheet 100 -- toward operable heating of same.

After the newly produced hot working fluid has impinged the glass sheet, the fluid that has impinged top surface 101 of glass sheet 100 will, in effect, move away from the surface, and this spent hot working fluid will then be drawn into second mixing chamber 28. Similarly, the working fluid gases that have impinged bottom surface 102 of glass sheet 100, will also move away from the surface and, in turn, be drawn into first mixing chamber 26 -- as shown by the direction of the arrows in Fig. 3 and Fig. 5.

As previously explained, the spent hot working fluid as well as the relatively high temperature gases of the newly produced hot products of combustion from the associated gas burner, such as gas burner 16 are drawn into the respective mixing chambers because of suction caused by the corresponding fans, such as fan 45. As also previously explained, the spent hot working fluid and the newly produced hot combustion gases mix within the respective mixing chambers to, in turn, result in a substantially uniform mixture of the fluids for further, recirculated, distribution of the heated working fluid to the respective top and bottom surfaces of the glass sheet.

Referring again to Fig. 1, the apparatus 10 of the present invention preferably includes at least one exhaust stack 110 connected to chamber 42. The exhaust stack 42 includes an adjustable damper 112 for controlling the rate of exhaust of combustion products from the system. By adjusting the damper 112 on each of the exhausts 110 to a pre-selected position, the flow rate of the exhaust through the stacks can be controlled to provide balanced, or, preferably slightly positive pressure in the system. This balanced or slightly positive pressure reduces drafts which would otherwise result from the influx of ambient air through openings in the furnace, such as at the entrance, exit, or at the conveyor roll seals. This reduction or elimination of unwanted influx of cooler air allows for better and more efficient control of the temperature throughout the heated environment.

## Claims

1. A gas-fired forced convection heating apparatus (10) for heating glass sheets (100), wherein the glass sheets each have a top surface (101) and a bottom surface (102), the forced convection heating apparatus comprising:
a housing (200) having an interior region;
a conveyor (202) for conveying a glass sheet horizontally through the interior region of the housing;
at least one gas burner (204) operably associated with the housing for producing hot products of combustion providing a heat input to the apparatus; an adjustor (210) operably associated with the gas burner for adjusting the level of heat input from the gas burner to the apparatus;
a mixing chamber (206) for mixing the hot products of combustion with working fluid recirculated within the housing;
a distributor (208) for distributing, and, in turn, impinging, the working fluid including at least a portion of the hot products of combustion from the gas burner to a surface of a glass sheet within the interior region of the housing; and
a velocity control (212) for adjusting the impingement velocity of the working fluid on the surface of the glass sheet, thereby controlling the rate of convective heat exchange between the working fluid and the glass sheet substantially independently of controlling the heat input to the apparatus.

2. The gas-fired forced convection heating apparatus according to claim 1
wherein the distributor further comprises a first distributor (20) for distributing and, in turn, impinging a portion of the working fluid to the bottom surface of the glass sheet, and a second distributor (22) for distributing, and, in turn, impinging, a portion of the working fluid to the top surface of the glass sheet.

3. The gas-fired forced convection heating apparatus according to Claim 1
wherein the velocity control further comprises:
a first velocity control (85) for controlling impingement velocity of the working fluid toward and into contact with the bottom surface of the glass sheet, and a second velocity control (86) for controlling impingement velocity of the working fluid toward and into contact with the top surface of the glass sheet, the first and second impingement velocity controls each being operable, and, in turn, controllable, independent of each other.

4. The gas-fired forced convection heating apparatus according to claim 1 wherein the adjustor comprises a first temperature control (83) for maintaining the temperature of the working fluid at a first preselected set point prior to impingement of same on the bottom surface of the glass sheet, and a second temperature control (84) for maintaining the temperature of the working fluid at a second preselected set point prior to impingement of same on the top surface of the glass sheet.

5. The gas-fired forced convection heating apparatus according to Claim 2 wherein the mixing chamber is operably positioned about at least a portion of the gas burner, and wherein the mixing chamber (26,28) includes a proximal end operably associated with the first and second distributors (20,22), and a second open end distally spaced from the proximal end; and
a director (30,32) for directing spent hot working fluid, which has impinged upon at least one of the top and bottom surfaces of the glass sheet, toward and into the mixing chamber for operable mixing of at least a portion of the spent hot working fluid with newly produced hot combustion gases from the gas burner toward transfer of same into at least one of the first and second distributors and, in turn, toward and into operable contact with at least one of the top and bottom surfaces of the glass sheet within the interior region of the housing.

6. The gas-fired forced convection heating apparatus according to Claim 5 wherein the forced convection heating apparatus further includes a mixer (36) for causing a mixture of the spent hot working fluid and the newly produced hot combustion gases within the mixing chamber.

7. The gas-fired forced convection heating apparatus according to Claim 6 wherein the gas burner means includes a longitudinal axis, and the mixer comprises:
a plurality of apertures (90-95) integrally formed in the gas burner means (16,18) for release of the hot combustion gases in a direction substantially perpendicular to the longitudinal axis of the gas burner means; and
the spent hot working fluid being operably drawn into the mixing chamber in a direction substantially perpendicular to the hot combustion gases as it is being operably released from the gas burner to, in turn, result in a mixture of the spent working fluid and newly produced hot combustion gases.

8. The gas-fired forced convection heating apparatus according to Claim 5 wherein the directing means include at least one fan (45,52) operably associated with the mixing chamber for drawing at least a portion of the spent hot working fluid which has impinged upon at least one of the top and bottom surfaces of the glass sheet within the interior region of the housing toward and into the mixing chamber.

9. The gas-fired forced convection heating apparatus invention according to Claim 2 wherein the first distributor and the second distributor each include at least one fan and at least one hot working fluid conduit member (46) operably associated with a corresponding one of the at least one fan;
each of the at least one hot working fluid conduit members having at least one nozzle member (50) operably positioned adjacent a corresponding one of the top and bottom surfaces of the glass sheet within the interior region of the housing for operably dispensing, and, in turn, impinging at least a portion of the hot combustion gases toward and onto the adjacent top and bottom surfaces of the glass sheet

10. The gas-fired forced convection heating apparatus according to Claim 9 wherein the first and second distributors each include a plenum member (47) operably positioned between corresponding ones of the at least one fan and the at least one hot working fluid conduit member.

11. The forced convection heating apparatus of claim 1 wherein the at least one gas burner comprises first (16) and second (18) gas burners;
the distributor comprises a first. distributor (20) for distributing, and, in turn, impinging, the hot combustion gases from the first gas burner to the bottom surface of the glass sheet within the interior region of the housing, and a second distributor (22) for distributing, and, in turn, impinging, the hot combustion gases from the second gas burner means to the top surface of the glass sheet within the interior region of the housing; and
the adjustor further comprises a first adjustor (83) for adjusting the level of heat input from the gas first burner, and a second adjustor (84) for adjusting the level of heat input to the second gas burner, the first and second adjusters being adjustable independent of each other.

12. The gas-fired forced convection heating apparatus according to Claim 11 wherein the forced convection heating apparatus further comprises:
a first mixing chamber (26) operably positioned about at least a portion of the first gas burner means;
a second mixing chamber (28) operably positioned about at least a portion of the second gas burner means;
the first and second mixing chambers each having a proximal end operably associated with a portion of a corresponding one of the first and second distributing means, and a second open end distally spaced from the proximal end;
a first director (30) for directing spent working fluid, which has impinged upon the bottom surface of the glass sheet, toward and into the first mixing chamber for operable mixing of at least a portion of the spent working fluid with newly produced hot combustion gases from the first gas burner toward transfer of same into the first distributor and, in turn, toward and into operable contact with the bottom surface of the glass sheet within the interior region of the housing; and
a second director (32) for directing spent working fluid, which has impinged upon the top surface of the glass sheet, toward and into the second mixing chamber for operable mixing of at least a portion of the spent working fluid with newly produced hot combustion gases from the second gas burner toward transfer of same into the second distributor and, in turn, toward and into operable contact with the top surface of the glass sheet within the interior region of the housing.

13. The gas-fired forced convection heating apparatus according to Claim 12 wherein the convection heating apparatus further comprises a mixer (36) for causing a mixture of the spent hot working fluid and the newly produced hot combustion gases within each of the first and second mixing chambers.

14. The gas-fired forced convection heating apparatus according to Claim 12 wherein:
the first director includes at least one fan (45) operably associated with the first mixing chamber for drawing at least a portion of the spent hot working fluid which has impinged upon the bottom surface of the glass sheet within the interior region of the housing toward and into the first mixing chamber; and
the second director includes at least one fan (52) operably associated with the second mixing chamber for drawing the spent hot working fluid which has impinged upon the top surface of the glass sheet within the interior region of the housing toward and into the second mixing chamber.

15. The gas-fired forced convection heating apparatus according to Claim 11 wherein the forced convection heating apparatus further comprises:
a first velocity control (85) for controlling impingement velocity of the hot working fluid toward and onto the tope surface of the glass sheet within the interior region of the housing;
a second velocity control (86) for controlling impingement velocity of the hot working fluid toward and onto the bottom surface of the glass sheet within the interior region of the housing; and
the first and second velocity controls being controllable independent of each other.

16. The gas-fired forced convection heating apparatus according to Claim 11 wherein the first and second adjustors each include at least one thermocouple (33,34) operably associated with a corresponding one of the first and second gas burner means.

17. The gas-fired forced convection heating apparatus according to Claim 11 wherein the first distributor and the second distributor each include at least one fan and at least one working fluid conduit member (46) operably associated with a corresponding one of the at least one fan;
each of the at least one working fluid conduit member having at least one nozzle member (50) operably positioned adjacent a corresponding one of the top and bottom surfaces of the glass sheet within the interior region of the housing for operably dispensing, and, in turn, impinging the working fluid toward and onto the adjacent top and bottom surfaces of the glass sheet.

18. The gas-fired forced convection heating apparatus according to claim 1 wherein the forced convection heating apparatus further comprises at least one exhaust stack (110) operably connected to exhaust combustion products from the system, each of the exhaust stacks including an adjustable damper (112) for controlling the flow rate of the exhaust through the stacks.

19. A process for heating a sheet of glass as it is conveyed horizontally in a forced convection heating apparatus, wherein the apparatus includes a housing having an interior region and the glass sheet has a top and bottom surface the process comprising the steps of:
inserting a glass sheet into the interior region of the housing;
producing hot combustion gases from at least one gas burner;
adjusting the rate of production of hot combustion gases from at least one gas burner, thereby adjusting the rate of heat input to the apparatus;
distributing the hot combustion gases from the at least one gas burner toward and into operable contact with a surface of the glass sheet within the interior region of the housing; and
adjusting the impingement velocity of the hot combustion gases on the surface of the glass sheet, thereby controlling the rate of convective heat exchange between the hot combustion gases and the glass sheet substantially independently of controlling the heat input to the apparatus.

20. The process according to claim 19 wherein the process further comprises the steps of:
adjusting the temperature of the portion of the hot combustion gases which are to be distributed toward and into contact with the bottom surface of the glass sheet; and
adjusting the temperature of the portion of the hot combustion gases which are to be distributed toward and into operable contact with the top surface of the glass sheet, the adjusting of the temperature of the hot combustion gases which is being distributed toward and into contact with the top and bottom surfaces, respectively, of the glass sheet, being adjustable independently of each other.

21. The process according to Claim 19 wherein the process for heating a glass sheet within a forced convection heating apparatus further comprises the steps of:
drawing at least a portion of spent working fluid, which has operably contacted the at least one of the top and bottom surfaces of the glass sheet, toward and into a mixing chamber operably associated with a corresponding one of the at least one gas burner ;
each of the mixing chambers being operably positioned about at least a portion of a corresponding one of the at least one gas burner;
mixing the spent working fluid in the mixing chamber with the hot combustion gases being produced from a corresponding one of the at least one gas burner; and
distributing the mixed spent working fluid and the newly produced hot combustion gases toward and into operable contact with at least one of the top and bottom surfaces of the glass sheet within the interior region of the housing.

22. The process according to Claim 19 wherein the process further comprises the steps of:
controlling the impingement velocity of the working fluid which is to come into contact with the bottom surface of the glass sheet; and
controlling the impingement velocity of the working fluid which is to come into contact with the surface of glass sheet, the controlling of the, impingement velocity of the portions of working fluid which are to come into contact with the top and bottom surfaces, respectively, of the glass sheet, being controllable independently of each other.

23. The process according to claim 19 wherein the process further comprises the steps of:
producing hot combustion gases from a first gas burner;
producing hot combustion gases from a second gas burner;
distributing the hot combustion gases from the first gas burner toward and into operable contact with the bottom surface of the glass sheet within the interior region of the housing;
distributing the hot combustion gases from the second gas burner toward and into operable contact with the top surface of the glass sheet within the interior region of the housing;
adjusting the temperature of the working fluid which is to be distributed toward and into contact with the bottom surface of the glass sheet; and
adjusting the temperature of the-working fluid which is to be distributed toward and into contact with the top surface of the glass sheet, the adjusting of the temperature of the working fluid which is being distributed toward and into contact with the top and bottom surfaces, respectively, of the glass sheet, being adjustable independently of each other.

## Patentansprüche

1. Eine gasbetriebene Zwangskonvektionsheizvorrichtung (10) zum Heizen von Glassplatten (100), wobei die Glasplatten jeweils eine obere Oberfläche (101) und eine untere Oberfläche (102) aufweisen, wobei die Zwangskonvektionsheizvorrichtung umfasst:
ein Gehäuse (200), das einen inneren Bereich aufweist;
ein Fördermittel (202) zur horizontalen Beförderung einer Glassplatte durch den inneren Bereich des Gehäuses;
mindestens einen Gasbrenner (204), der betriebsfähig an das Gehäuse angeschlossen ist, um heiße Verbrennungsprodukte zu erzeugen, und der eine Wärmeeinspeisung in die Vorrichtung bereitstellt; ein Justagemittel (210), das an den Gasbrenner betriebsfähig angeschlossen ist, um die Größe der Wärmeeinspeisung von dem Gasbrenner in die Vorrichtung anzupassen;
eine Mischkammer (206) zum Mischen der heißen Verbrennungsprodukte mit einer Arbeitsflüssigkeit, die im Gehäuse umläuft;
einen Verteiler (208) zum Verteilen, und weiterhin Stoßen, der Arbeitsflüssigkeit, die mindestens einen Teil der heißen Verbrennungsprodukte von dem Gasbrenner umfasst, zu einer Oberfläche einer Glassplatte im inneren Bereich des Gehäuses; und
eine Geschwindigkeitssteuerung (212) zum Einstellen der Stossgeschwindigkeit der Arbeitsflüssigkeit auf die Oberfläche der Glassplatte, wobei dabei die Rate an Konvektionswärmeaustausch zwischen der Arbeitsflüssigkeit und der Glassplatte im Wesentlichen unabhängig von der Steuerung der Wärmeeinspeisung in die Vorrichtung gesteuert wird.

2. Gasbetriebene Zwangskonvektionsheizvorrichtung nach Anspruch 1, wobei der Verteiler weiterhin einen ersten Verteiler (20) zum Verteilen und weiterhin Stoßen eines Teils der Arbeitsflüssigkeit zur unteren Oberfläche der Glasplatte umfasst und einen zweiten Verteiler (22) zum Verteilen und weiterhin Stoßen eines Teils der Arbeitsflüssigkeit zu der oberen Oberfläche der Glasplatte.

3. Gasbetriebene Zwangskonvektionsheizvorrichtung nach Anspruch 1, wobei die Geschwindigkeitssteuerung weiterhin umfasst:
eine erste Geschwindigkeitssteuerung (85) zur Steuerung der Stoßgeschwindigkeit der Arbeitsflüssigkeit in Richtung und in Kontakt mit der unteren Oberfläche der Glasplatte und eine zweite Geschwindigkeitssteuerung (86) zur Steuerung der Stoßgeschwindigkeit der Arbeitsflüssigkeit in Richtung und in Kontakt mit der oberen Oberfläche der Glasplatte,
wobei die ersten und zweiten Stoßgeschwindigkeitssteuerungen jeweils unabhängig von einander betriebsfähig und weiterhin steuerfähig sind.

4. Gasbetriebene Zwangskonvektionsheizvorrichtung nach Anspruch 1, wobei das Justagemittel eine erste Temperatursteuerung (83) zur Aufrechterhaltung der Temperatur der Arbeitsflüssigkeit an einem ersten vorgewählten Set-point umfasst, bevor selbige auf der unteren Oberfläche der Glasplatte auftrifft, und eine zweite Temperatursteuerung (84) zur Aufrechterhaltung der Temperatur der Arbeitsflüssigkeit an einem zweiten vorgewählten Set-point, bevor selbige auf die obere Oberfläche der Glasplatte auftrifft.

5. Gasbetriebene Zwangkonvektionsheizvorrichtung nach Anspruch 2, wobei die Mischkammer betriebsfähig um zumindest einen Teil des Gasbrenners angeordnet ist, und
wobei die Mischkammer (26, 28) ein proximales Ende umfasst, das an die ersten und zweiten Verteiler (20, 22) betriebsfähig angeschlossen ist, und ein zweites offenes Ende, das von dem proximalen Ende distal beabstandet ist; und
ein Richtgerät (30,32) zum Ausrichten ausgegebener heißer Arbeitsflüssigkeit, die auf zumindest eine der unteren und oberen Oberflächen der Glasplatte aufgetroffen ist, in Richtung und in die Mischkammer zum Mischen zumindest eines Teils der ausgegebenen heißen Arbeitsflüssigkeit mit neu produzierten heißen Verbrennungsgasen aus dem Gasbrenner in Richtung des Transfers selbiger in zumindest einen der ersten und zweiten Verteiler und weiterhin in Richtung und in betriebsfähigen Kontakt mit zumindest einer der oberen und unteren Oberflächen der Glasplatte innerhalb des inneren Bereichs des Gehäuses.

6. Gasbetriebene Zwangskonvektionsheizvorrichtung nach Anspruch 5, wobei die Zwangskonvektionsheizvorrichtung weiterhin einen Mischer (36) zur Bereitstellung eines Gemisches aus ausgegebener heißer Arbeitsflüssigkeit und den neu produzierten heißen Verbrennungsgasen innerhalb der Mischkammer umfasst.

7. Gasbetriebene Zwangskonvektionsheizvorrichtung nach Anspruch 6, wobei das Gasbrennermittel eine Längsachse umfasst, und der Mischer umfasst:
eine Vielzahl von Öffnungen (90-95), die integral in dem Gasbrennerbauteil (16, 18) ausgebildet sind, um die heißen Verbrennungsgase in eine Richtung auszustoßen, welche im Wesentlichen senkrecht zur Längsachse des Gasbrennerbauteils steht; und
wobei die ausgegebene heiße Arbeitsflüssigkeit in die Mischkammer eingezogen wird, in einer Richtung, die im Wesentlichen senkrecht zu der Richtung der heißen Verbrennungsgase steht, während sie von dem Gasbrenner freigesetzt wird, um eine Mischung aus ausgegebener Arbeitsflüssigkeit und neu produzierten heißen Verbrennungsgasen zu bilden.

8. Gasbetriebene Zwangskonvektionsheizvorrichtung nach Anspruch 5, wobei das Richtgerät zumindest einen Ventilator (45, 52) umfasst, der betriebsfähig an die Mischkammer angeschlossen ist, um zumindest einen Teil der ausgegebenen heißen Arbeitsflüssigkeit, die auf zumindest eine der oberen und unteren Oberflächen der Glasplatte aufgetroffen ist, in den inneren Bereich des Gehäuses in Richtung und in die Mischkammer hineinzuziehen.

9. Gasbetriebene Zwangskonvektionsheizvorrichtung nach Anspruch 2, wobei der erste Verteiler und der zweite Verteiler jeweils zumindest einen Ventilator und zumindest ein Glied zum Leiten der heißen Arbeitsflüssigkeit (46) umfassen, das an einen entsprechenden der mindestens einen Ventilatoren betriebsfähig angeschlossen ist;
wobei jedes des mindestens einen Glieds zum Leiten der heißen Arbeitsflüssigkeit mindestens ein Düsenbauteil (50) aufweist, das benachbart zu einer entsprechenden Oberfläche der oberen und unteren Oberflächen der Glasplatte betriebsfähig angeordnet ist, innerhalb des inneren Bereichs des Gehäuses, um mindestens einen Teil der heißen Verbrennungsgase betriebsfähig auszugeben und weiterhin in Richtung und auf die benachbarten oberen und unteren Oberflächen der Glasplatte zu stoßen.

10. Gasbetriebene Zwangskonvektionsheizvorrichtung nach Anspruch 9, wobei die ersten und zweiten Verteiler jeweils ein Verteilerbauteil (47) umfassen, das zwischen entsprechenden der mindestens einen Ventilatoren und der mindestens einen Rohrbauteile für heiße Arbeitsflüssigkeit angeordnet ist.

11. Zwangskonvektionsheizvorrichtung nach Anspruch 1, wobei der mindestens eine Gasbrenner einen ersten (16) uns zweiten (18) Gasbrenner umfasst;
wobei der Verteiler einen ersten Verteiler (20) zum Verteilen und weiterhin zum Stoßen der heißen Verbrennungsgase von dem ersten Gasbrenner auf die untere Oberfläche der Glasplatte innerhalb des inneren Bereichs des Gehäuses umfasst, und einen zweiten Verteiler (22) zum Verteilen und weiterhin zum Stoßen der heißen Verbrennungsgase von dem zweiten Gasbrennerbauteil zu der oberen Oberfläche der Glasplatte innerhalb des inneren Bereichs des Gehäuses; und
das Justagemittel umfasst weiterhin ein erstes Justagemittel (83) zum Anpassen der Größe der Wärmeeinspeisung von dem ersten Gasbrenner, und ein zweites Justagemittel (84) zum Anpassen der Größe der Wärmeeinspeisung zum zweiten Gasbrenner, wobei erste und zweite Gasbrenner unabhängig voneinander anpassbar sind.

12. Gasbetriebene Zwangkonvektionsheizvorrichtung nach Anspruch 11, wobei die Zwangskonvektionsheizvorrichtung weiterhin umfasst:
eine erste Mischkammer (26), die um mindestens einen Teil des ersten Gasbrenners betriebsfähig angeordnet ist;
eine zweite Mischkammer (28), die um mindestens einen Teil des zweiten Gasbrenners betriebsfähig angeordnet ist;
wobei die ersten und zweiten Mischkammern jeweils ein proximales Ende auf weisen, das an einen Teil des entsprechenden ersten oder zweiten Verteilerbauteils betriebsfähig angeschlossen ist, und ein zweites offenes Ende, das distal vom proximalen Ende beabstandet ist;
ein erstes Richtgerät (30) zum Ausrichten ausgegebener Arbeitsflüssigkeit, die auf die untere Oberfläche der Glasplatte aufgetroffen ist, in Richtung und in die erste Mischkammer zum betriebsfähigen Mischen von mindestens einem Teil der ausgegebenen Arbeitsflüssigkeit mit neu produzierten heißen Verbrennungsgasen von dem ersten Gasbrenner, in Richtung des Transfers selbiger in den ersten Verteiler und weiterhin in Richtung und in betriebsfähigen Kontakt mit der unteren Oberfläche der Glasplatte innerhalb des inneren Bereichs des Gehäuses; und
ein zweites Richtgerät (32) zum Ausrichten ausgegebener Arbeitsflüssigkeit, die auf die obere Oberfläche der Glasplatte aufgetroffen ist, in Richtung und in die zweite Mischkammer zum betriebsfähigen Mischen von mindestens einem Teil der ausgegebenen Arbeitsflüssigkeit mit neu produzierten heißen Verbrennungsgasen aus dem zweiten Gasbrenner in Richtung Transfer selbiger in den zweiten Verteiler und weiterhin in Richtung und in betriebsfähigen Kontakt mit der oberen Oberfläche der Glasplatte innerhalb des inneren Bereichs des Gehäuses.

13. Gasbetriebene Zwangskonvektionsheizvorrichtung nach Anspruch 12, wobei die Könvektionsheizvorrichtung weiterhin einen Mischer (36) zum Bereitstellen eines Gemisches aus der ausgegebenen heißen Arbeitsflüssigkeit und den neu produzierten heißen Verbrennungsgasen innerhalb jeder der ersten und zweiten Mischkammern umfasst.

14. Gasbetriebene Zwangskonvektionsheizvorrichtung nach Anspruch 12, wobei:
das erste Richtgerät mindestens einen Ventilator (45) umfasst, der an die erste Mischkammer operativ angeschlossen ist, um mindestens einen Teil der ausgegebenen heißen Arbeitsflüssigkeit anzusaugen, die auf die untere Oberfläche der Glasplatte innerhalb des inneren Bereichs des Gehäuses aufgetroffen ist, in Richtung und in die erste Mischkammer; und
das zweite Richtgericht mindestens einen Ventilator (52) umfasst, der an die zweite Mischkammer operativ angeschlossen ist, um die ausgegebene heiße Arbeitsflüssigkeit, die auf die obere Oberfläche der Glasplatte in dem inneren Bereich des Gehäuses aufgetroffen ist, anzusaugen, in Richtung und in die zweite Mischkammer.

15. Gasbetriebene Zwangskonvektionsheizvorrichtung nach Anspruch 11, wobei die Zwangskonvektionsheizvorrichtung weiterhin umfasst:
eine erste Geschwindigkeitssteuerung (85) zur Steuerung der Stossgeschwindigkeit der heißen Arbeitsflüssigkeit in Richtung und auf die obere Oberfläche der Glasplatte innerhalb des inneren Bereichs des Gehäuses;
eine zweite Geschwindigkeitssteuerung (86) zur Steuerung der Stossgeschwindigkeit der heißen Arbeitsflüssigkeit in Richtung und auf die untere Oberfläche der Glasplatte innerhalb des inneren Bereichs des Gehäuses; und
wobei die ersten und zweiten Geschwindigkeitssteuerungen unabhängig voneinander steuerbar sind.

16. Gasbetriebene Zwangskonvektionsheizvorrichtung nach Anspruch 11, wobei die ersten und zweiten Justagemittel jeweils mindestens ein Thermoelement (33, 34) umfassen, das an einem entsprechenden der ersten und zweiten Gasbrenner betriebsfähig angeschlossen ist.

17. Gasbetriebene Zwangskonvektionsheizvorrichtung nach Anspruch 11, wobei der erste Verteiler und der zweite Verteiler jeweils mindestens einen Ventilator und mindestens ein Leitungsglied (46) für die Arbeitsflüssigkeit umfassen, wobei das mindestens eine Rohrbauteil an einen entsprechenden der mindestens einen Ventilatoren betriebsfähig angeschlossen ist;
wobei jedes der mindestens einen Leitungsglieder für die Arbeitsflüssigkeit mindestens ein Düsenbauteil (50) aufweist, das benachbart zu einer entsprechenden der oberen und unteren Oberflächen der Glasplatte innerhalb des inneren Bereichs des Gehäuses betriebsfähig angeordnet ist, um die Arbeitsflüssigkeit auszugeben und weiterhin die Arbeitsflüssigkeit in Richtung und auf die benachbarten oberen und unteren Oberflächen der Glasplatte zu stoßen.

18. Gasbetriebene Zwangskonvektionsheizvorrichtung nach Anspruch 1, wobei die Zwangskonvektionsheizvorrichtung weiterhin mindestens eine Abgasleitung (110) umfasst, die betriebsfähig an die Abgasverbrennungsprodukte des Systems angeschlossen ist, wobei jede der Abgasleitungen eine einstellbare Drossel (112) zur Steuerung der Flussrate der Abgase durch die Leitungen umfasst.

19. Verfahren zum Heizen einer Glasplatte in einer Zwangskonvektionsheizvorrichtung, während die Glasplatte in horizontale Richtung befördert wird, wobei die Vorrichtung ein Gehäuse umfasst, das einen inneren Bereich aufweist, und die Glasplatte eine obere und untere Oberfläche aufweist, wobei das Verfahren die Schritte umfasst:
Einführen einer Glasplatte in den inneren Bereich des Gehäuses;
Produktion heißer Verbrennungsgase aus mindestens einem Gasbrenner;
Anpassen der Produktionsrate an heißen Verbrennungsgasen aus mindestens einem Gasbrenner, wobei die Rate der Wärmeeinspeisung in die Vorrichtung angepasst wird;
Verteilen der heißen Verbrennungsgase von dem mindestens einen Gasbrenner in Richtung und in betriebsfähigen Kontakt mit einer Oberfläche der Glasplatte innerhalb des inneren Bereichs des Gehäuses; und
Anpassen der Stossgeschwindigkeit der heißen Verbrennungsgase auf die Oberfläche der Glasplatte, wobei die Rate des Konvektionswärmeaustausches zwischen den heißen Verbrennungsgasen und der Glasplatte im Wesentlichen unabhängig von der Steuerung der Wärmeeinspeisung in die Vorrichtung gesteuert wird.

20. Verfahren nach Anspruch 19, wobei das Verfahren weiterhin die Schritte umfasst:
Anpassen der Temperatur des Teiles der heißen Verbrennungsgase, die in Richtung und in Kontakt mit der unteren Oberfläche der Glasplatte verteilt werden sollen; und
Anpassen der Temperatur des Teiles der heißen Verbrennungsgase, die in Richtung und in operativen Kontakt mit der oberen Oberfläche der Glasplatte verteilt werden sollen, wobei das Anpassen der Temperatur der heißen Verbrennungsgase, die in Richtung und in Kontakt mit den entsprechenden oberen und unteren Oberflächen der Glasplatte verteilt werden, unabhängig voneinander anpassbar ist.

21. Verfahren nach Anspruch 19, wobei das Verfahren zum Heizen einer Glasplatte innerhalb einer Zwangskonvektionsheizvorrichtung weiterhin die Schritte umfasst:
Einsaugen mindestens eines Teiles der ausgegebenen Arbeitsflüssigkeit, welche die mindestens eine der oberen und unteren Oberflächen der Glasplatte betriebsfähig kontaktiert hat, in Richtung und in eine Mischkammer, die betriebsfähig an einen entsprechenden der mindestens einen Gasbrenner angeschlossen ist;
wobei jede der Mischkammern betriebsfähig um zumindest einen Teil eines entsprechenden der mindestens einen Gasbrenner angeordnet ist;
Mischen der ausgegebenen Arbeitsflüssigkeit in der Mischkammer mit den heißen Verbrennungsgasen, die von einem entsprechenden der mindestens einen Gasbrenner produziert werden; und
Verteilen der gemischten ausgegebenen Arbeitsflüssigkeit und der neu produzierten heißen Verbrennungsgase in Richtung und in betriebsfähigen Kontakt mit mindestens einer der oberen und unteren Oberflächen der Glasplatte innerhalb dem inneren Bereich des Gehäuses.

22. Verfahren nach Anspruch 19, wobei das Verfahren weiterhin die Schritte umfasst:
Steuern der Stossgeschwindigkeit der Arbeitsflüssigkeit, die in Kontakt mit der unteren Oberfläche der Glasplatte kommen wird; und
Steuern der Stossgeschwindigkeit der Arbeitsflüssigkeit, die in Kontakt mit der oberen Oberfläche der Glasplatte kommen wird, wobei das Steuern der Stossgeschwindigkeit der Teile der Arbeitsflüssigkeit, die in Kontakt mit den entsprechenden oberen und unteren Oberflächen der Glasplatte kommen werden, unabhängig voneinander stattfindet.

23. Verfahren nach Anspruch 19, wobei das Verfahren weiterhin die Schritte umfasst:
Produzieren heißer Verbrennungsgase aus einem ersten Gasbrenner;
Produzieren heißer Verbrennungsgase aus einem zweiten Gasbrenner;
Verteilen der heißen Verbrennungsgase aus dem ersten Gasbrenner in Richtung und in betriebsfähigen Kontakt mit der unteren Oberfläche der Glasplatte innerhalb des inneren Bereichs des Gehäuses;
Verteilen der heißen Verbrennungsgase aus dem zweiten Gasbrenner in Richtung und in betriebsfähigen Kontakt mit der oberen Oberfläche der Glasplatte innerhalb des inneren Bereichs des Gehäuses;
Anpassen der Temperatur der Arbeitsflüssigkeit, die in Richtung und in Kontakt mit der unteren Oberfläche der Glasplatte verteilt werden soll; und
Anpassen der Temperatur der Arbeitsflüssigkeit, die in Richtung und in Kontakt mit der oberen Oberfläche der Glasplatte verteilt werden soll, wobei das Einstellen der Temperatur der Arbeitsflüssigkeit, die in Richtung und in Kontakt mit den entsprechenden unteren und oberen Oberflächen der Glasplatte verteilt wird, unabhängig voneinander anpassbar ist.

## Revendications

1. Appareil de chauffage à convection forcée à gaz (10) pour chauffer des feuilles de verre (100), dans lequel les feuilles de verre ont chacune une surface supérieure (101) et une surface inférieure (102), l'appareil de chauffage à convection forcée comprenant :
un carter (200) ayant une région intérieure ;
un convoyeur (202) pour acheminer une feuille de verre horizontalement dans la région intérieure du carter ;
au moins un brûleur à gaz (204) associé en fonctionnement au carter pour produire des produits chauds de combustion fournissant un apport calorifique à l'appareil ; un dispositif de réglage (210) associé en fonctionnement au brûleur à gaz pour régler le niveau d'apport calorifique entre le brûleur à gaz et l'appareil ;
une chambre de mélange (206) pour mélanger les produits chauds de combustion, le fluide de fonctionnement étant recyclé dans le carter ;
un distributeur (208) pour distribuer, et, par suite, injecter, le fluide de fonctionnement incluant au moins une partie des produits chauds de combustion du brûleur à gaz à une surface d'une feuille de verre dans la région intérieure du carter ; et
un contrôle de vitesse (212) pour régler la vitesse d'injection du fluide de fonctionnement sur la surface de la feuille de verre, pour contrôler de ce fait le taux d'échange thermique par convection entre le fluide de fonctionnement et la feuille de verre sensiblement indépendamment du contrôle de l'apport calorifique à l'appareil.

2. Appareil de chauffage à convection forcée à gaz selon la revendication 1, dans lequel le distributeur comprend, en outre, un premier distributeur (20) pour distribuer et, par suite, injecter, une partie du fluide de fonctionnement sur la surface inférieure de la feuille de verre, et un second distributeur (22) pour distribuer et, par suite, injecter, une partie du fluide de fonctionnement sur la surface supérieure de la feuille de verre.

3. Appareil de chauffage à convection forcée à gaz selon la revendication 1, dans lequel le contrôle de vitesse comprend, en outre :
un premier contrôle de vitesse (85) pour contrôler la vitesse d'injection du fluide de fonctionnement vers et en contact avec la surface inférieure de la feuille de verre, et un second contrôle de vitesse (86) pour contrôler la vitesse d'injection du fluide de fonctionnement vers et en contact avec la surface supérieure de la feuille de verre, les premier et second contrôles de vitesse d'injection pouvant chacun fonctionner, et, par suite, être contrôlés, indêpendamment l'un de l'autre.

4. Appareil de chauffage à convection forcée à gaz selon la revendication 1, dans lequel le dispositif de réglage comprend un premier contrôle de température (83) pour maintenir la température du fluide de fonctionnement à un premier point de consigne présélectionné avant injection de celui-ci sur la surface inférieure de la feuille de verre, et un second contrôle de température (84) pour maintenir la température du fluide de fonctionnement à un second point de consigne présélectionné avant injection de celui-ci sur la surface supérieure de la feuille de verre.

5. Appareil de chauffage à convection forcée à gaz selon la revendication 2, dans lequel la chambre de mélange est positionnée en fonctionnement sur au moins une partie du brûleur à gaz, et dans lequel la chambre de mélange (26, 28) inclut une extrémité proximale associée en fonctionnement aux premier et second distributeurs (20, 22), et une seconde extrémité ouverte distale espacée de l'extrémité proximale ; et
un élément directeur (30, 32) pour diriger le fluide de fonctionnement chaud utilisé, qui a été injecté sur au moins une des surfaces inférieure et supérieure de la feuille de verre, vers et dans la chambre de mélange pour mélanger en fonctionnement au moins une partie du fluide de fonctionnement chaud utilisée avec des gaz de combustion chauds nouvellement produits par le brûleur à gaz vers le transfert de ceux-ci dans au moins un des premier et second distributeurs et, par suite, vers et en contact de fonctionnement avec au moins une des surfaces inférieure et supérieure de la feuille de verre dans la région intérieure du carter.

6. Appareil de chauffage à convection forcée à gaz selon la revendication 5, dans lequel l'appareil de chauffage à convection forcée inclut en outre un mélangeur (36) pour provoquer un mélange du fluide de fonctionnement chaud utilisé et des gaz de combustion chauds nouvellement produits dans la chambre de mélange.

7. Appareil de chauffage à convection forcée à gaz selon la revendication 6, dans lequel le moyen à brûleur à gaz inclut un axe longitudinal, et dans lequel le mélangeur comprend :
une pluralité d'ouvertures (90 à 95) intégralement formées dans le moyen à brûleur à gaz (16, 18) pour le dégagement des gaz de combustion chauds dans une direction sensiblement perpendiculaire à l'axe longitudinal du moyen à brûleur à gaz ; et
le fluide de fonctionnement chaud utilisé étant aspiré en fonctionnement dans la chambre de mélange dans une direction sensiblement perpendiculaire aux gaz de combustion chauds tels qu'ils sont dégagés en fonctionnement du brûleur à gaz pour constituer, par suite, un mélange du fluide de fonctionnement utilisé et des gaz de combustion chauds nouvellement produits.

8. Appareil de chauffage à convection forcée à gaz selon la revendication 5, dans lequel les moyens de direction incluent au moins un ventilateur (45, 52) associé en fonctionnement à la chambre de mélange pour aspirer au moins une partie du fluide de fonctionnement chaud utilisée qui a été injectée sur au moins une des surfaces inférieure et supérieure de la feuille de verre dans la région intérieure du carter vers et dans la chambre de mélange.

9. Appareil de chauffage à convection forcée à gaz selon la revendication 2, dans lequel le premier distributeur et le second distributeur incluent chacun au moins un ventilateur et au moins un élément de conduit de fluide de fonctionnement chaud (46) associé en fonctionnement à un correspondant du au moins un ventilateur ;
chacun du au moins un élément de conduit de fluide de fonctionnement chaud ayant au moins un élément de buse (50) positionné de manière adjacente à une correspondante des surfaces inférieure et supérieure de la feuille de verre dans la région intérieure du carter pour distribuer en fonctionnement, et, par suite, injecter au moins une partie des gaz de combustion chauds vers et sur les surfaces inférieure et supérieure adjacentes de la feuille de verre.

10. Appareil de chauffage à convection forcée à gaz selon la revendication 9, dans lequel le premier et le second distributeurs incluent chacun un élément de plénum (47) positionné en fonctionnement entre un ventilateur du au moins un ventilateur et un élément du au moins un élément de conduit de fluide de fonctionnement chaud correspondants.

11. Appareil de chauffage à convection forcée à gaz selon la revendication 1, dans lequel le au moins un brûleur à gaz comprend un premier (16) et un second (18) brûleurs à gaz ;
le distributeur comprend un premier distributeur (20) pour distribuer, et, par suite, injecter les gaz de combustion chauds du premier brûleur à gaz à la surface inférieure de la feuille de verre dans la région intérieure du carter, et un second distributeur (22) pour distribuer, et, par suite, injecter les gaz de combustion chauds du second moyen à brûleur à gaz à la surface supérieure de la feuille de verre dans la région intérieure du carter ; et
le dispositif de réglage comprend, en outre, un premier dispositif de réglage (83) pour régler le niveau d'apport calorifique à partir du premier brûleur à gaz, et un second dispositif de réglage (84) pour régler le niveau d'apport calorifique vers le second brûleur à gaz, les premier et second dispositifs de réglage étant réglables indépendamment l'un de l'autre.

12. Appareil de chauffage à convection forcée à gaz selon la revendication 11, dans lequel l'appareil de chauffage à convection forcée comprend
une première chambre de mélange (26) positionnée en fonctionnement sur au moins une partie du premier moyen à brûleur à gaz ;
une seconde chambre de mélange (28) positionnée en fonctionnement sur au moins une partie du second moyen à brûleur à gaz ;
les première et seconde chambres de mélange ayant chacune une extrémité proximale associée en fonctionnement à une partie d'un correspondant des premier et second moyens de distribution, et une seconde extrémité ouverte distale espacée de l'extrémité proximale ;
un premier élément directeur (30) pour diriger le fluide de fonctionnement utilisé, qui a été injecté sur la surface inférieure de la feuille de verre, vers et dans la première chambre de mélange pour mélanger en fonctionnement au moins une partie du fluide de fonctionnement utilisée avec des gaz de combustion chauds nouvellement produits par le premier brûleur à gaz vers le transfert de ceux-ci dans le premier distributeur et, par suite, vers et en contact de fonctionnement avec la surface inférieure de la feuille de verre dans la région intérieure du carter ; et
un second élément directeur (32) pour diriger le fluide de fonctionnement utilisé, qui a été injecté sur la surface supérieure de la feuille de verre, vers et dans la seconde chambre de mélange pour mélanger en fonctionnement au moins une partie du fluide de fonctionnement utilisée avec des gaz de combustion chauds nouvellement produits par le second brûleur à gaz vers le transfert de ceux-ci dans le second distributeur et, par suite, vers et en contact de fonctionnement avec la surface supérieure de la feuille de verre dans la région intérieure du carter.

13. Appareil de chauffage à convection forcée à gaz selon la revendication 12, dans lequel l'appareil de chauffage à convection comprend en outre un mélangeur (36) pour provoquer un mélange du fluide de fonctionnement chaud utilisé et des gaz de combustion chauds nouvellement produits dans chacune des première et seconde chambres de mélange.

14. Appareil de chauffage à convection forcée à gaz selon la revendication 12, dans lequel
le premier élément directeur inclut au moins un ventilateur (45) associé en fonctionnement à la première chambre de mélange pour aspirer au moins une partie du fluide de fonctionnement chaud utilisée qui a été injectée sur la surface inférieure de la feuille de verre dans la région intérieure du carter vers et dans la première chambre de mélange ; et
le second élément directeur inclut au moins un ventilateur (52) associé en fonctionnement à la seconde chambre de mélange pour aspirer le fluide de fonctionnement chaud utilisé qui a été injecté sur la surface supérieure de la feuille de verre dans la région intérieure du carter vers et dans la seconde chambre de mélange.

15. Appareil de chauffage à convection forcée à gaz selon la revendication 11, dans lequel l'appareil de chauffage à convection forcée comprend en outre :
un premier contrôle de vitesse (85) pour contrôler la vitesse d'injection du fluide de fonctionnement chaud vers et sur la surface supérieure de la feuille de verre dans la région intérieure du carter ;
un second contrôle de vitesse (86) pour contrôler la vitesse d'injection du fluide de fonctionnement chaud vers et sur la surface inférieure de la feuille de verre dans la région intérieure du carter ; et
les premier et second contrôles de vitesse pouvant être contrôlés indépendamment l'un de l'autre.

16. Appareil de chauffage à convection forcée à gaz selon la revendication 11, dans lequel les premier et second dispositifs de réglage incluent chacun au moins un thermocouple (33, 34) associé en fonctionnement à un correspondant du premier et second moyens à brûleur à gaz.

17. Appareil de chauffage à convection forcée à gaz selon la revendication 11, dans lequel le premier distributeur et le second distributeur incluent chacun au moins un ventilateur et au moins un élément de conduit de fluide de fonctionnement (46) associé en fonctionnement à un correspondant un du au moins un ventilateur ;
chacun du au moins un élément de conduit, de fluide de fonctionnement ayant au moins un élément de buse (50) positionné en fonctionnement de manière adjacente à une correspondante des surfaces inférieure et supérieure de la feuille de verre dans la région intérieure du carter pour distribuer en fonctionnement, et, par suite, injecter le fluide de fonctionnement vers et sur les surfaces inférieure et supérieure adjacentes de la feuille de verre.

18. Appareil de chauffage à convection forcée à gaz selon la revendication 1, dans lequel l'appareil de chauffage à convection forcée comprend en outre au moins une cheminée d'évacuation (110) reliée en fonctionnement à des produits de combustion d'évacuation du système, chacune des cheminées d'évacuation incluant un registre réglable (112) pour contrôler le débit de l'évacuation par les cheminées.

19. Méthode pour chauffer une feuille de verre lorsqu'elle est acheminée horizontalement dans un appareil de chauffage à convection forcée, dans lequel l'appareil inclut un carter ayant une région intérieure et la feuille de verre a une surface inférieure et supérieure, la méthode comprenant les étapes de :
insertion d'une feuille de verre dans la région intérieure du carter ;
production de gaz de combustion chauds par au moins un brûleur à gaz ;
réglage du débit de production de gaz de combustion chauds par au moins un brûleur à gaz, réglant de ce fait le débit d'apport calorifique vers l'appareil ;
distribution des gaz de combustion chauds par le au moins un brûleur à gaz vers et en contact de fonctionnement avec une surface de la feuille de verre dans la région intérieure du carter ; et
réglage de la vitesse d'injection des gaz de combustion chauds sur la surface de la feuille de verre, contrôlant de ce fait le débit d'échange thermique par convection entre les gaz de combustion chauds et la feuille de verre sensiblement indépendamment du contrôle de l'apport calorifique vers l'appareil.

20. Méthode selon la revendication 19, dans laquelle la méthode comprend en outre les étapes de :
réglage de la température de la partie des gaz de combustion chauds qui doit être distribuée vers et en contact avec la surface inférieure de la feuille de verre ; et
réglage de la température de la partie des gaz de combustion chauds qui doit être distribuée vers et en contact de fonctionnement avec la surface supérieure de la feuille de verre, le réglage de la température des gaz de combustion chauds qui sont distribués vers et en contact avec, respectivement, les surfaces inférieure et supérieure de la feuille de verre, étant réglable indépendamment l'un de l'autre.

21. Méthode selon la revendication 19, dans laquelle la méthode pour chauffer une feuille de verre dans un appareil de chauffage à convection forcée comprend en outre les étapes de :
aspiration d'au moins une partie du fluide de fonctionnement utilisée, qui est entrée en contact en fonctionnement avec la au moins une des surfaces inférieure et supérieure de la feuille de verre, vers et dans une chambre de mélange associée en fonctionnement avec un correspondant un du au moins un brûleur à gaz ;
chacune des chambres de mélange étant positionnée en fonctionnement sur au moins une partie d'un correspondant un du au moins un brûleur à gaz :
mélange du fluide de fonctionnement utilisé dans la chambre de mélange avec les gaz de combustion chauds produits par un correspondant un du au moins un brûleur à gaz ; et
distribution du fluide de fonctionnement utilisé mélangé et des gaz de combustion chauds nouvellement produits vers et en contact de fonctionnement avec au moins une des surfaces inférieure et supérieure de la feuille de verre dans la région intérieure du carter.

22. Méthode selon la revendication 19, dans laquelle la méthode comprend en outre les étapes de :
contrôle de la vitesse d'injection du fluide de fonctionnement qui doit venir en contact avec la surface inférieure de la feuille de verre ; et
contrôle de la vitesse d'injection du fluide de fonctionnement qui doit venir en contact avec la surface supérieure de la feuille de verre, le contrôle de la vitesse d'injection des parties du fluide de fonctionnement qui doivent venir en contact, respectivement, avec les surfaces inférieure et supérieure de la feuille de verre, étant contrôlable indépendamment l'un de l'autre.

23. Méthode selon la revendication 19, dans laquelle la méthode comprend en outre les étapes de :
production de gaz de combustion chauds par un premier brûleur à gaz ;
production de gaz de combustion chauds par un second brûleur à gaz ;
distribution des gaz de combustion chauds par le premier brûleur à gaz vers et en contact de fonctionnement avec la surface inférieure de la feuille de verre dans la région intérieure du carter ;
distribution des gaz de combustion chauds par le second brûleur à gaz vers et en contact de fonctionnement avec la surface supérieure de la feuille de verre dans la région intérieure du carter ;
réglage de la température du fluide de fonctionnement qui doit être distribué vers et en contact avec la surface inférieure de la feuille de verre ; et
réglage de la température du fluide de fonctionnement qui doit être distribué vers et en contact avec la surface supérieure de la feuille de verre, le réglage de la température du fluide de fonctionnement qui doit être distribué vers et en contact avec, respectivement, les surfaces inférieure et supérieure de la feuille de verre, étant réglable indépendamment l'un de l'autre.
